# EUROPÄISCHE PATENTANMELDUNG

(11) **EP 0 523 562 A1**
(43) Veröffentlichungstag der Anmeldung: **20.01.1993**
(21) Anmeldenummer: 92111784.2
(22) Anmeldetag: 10.07.1992
(51) Int. Cl.: A01K 93/00

(54) **Angelpose mit Multifunktions-Ösenbügel**

(30) Priorität: 13.07.1991 DE 4123275; 01.02.1992 DE 4202950
(71) Anmelder: Thiemann, Gerhard, D-71711 Murr (DE)
(72) Erfinder: Thiemann, Gerhard, D-71711 Murr (DE)

(57) **Zusammenfassung**

Beschrieben wird eine gattungsgemäße Angelpose 1 mit einem erfindungsgemäßen Multifunktions-Ösenbügel 2, der zumindest zwei jeweils eine Schnureinleitung 9,10 aufweisende Schnuröse 4,5 besitzt und dabei bewegbar, an einer entsprechenden Angelpose angeordnet ist. Zu diesem Zweck ist er mit den federnden geraden Schenkel 3 in der Öffnung 7 gehaltert, wobei der gerade Schenkel 3 beidseitig senkrecht, an deren Umrandungen hervorragt. Entlang an der AngelposenAußenkontur ist ein federnder gebogener Schenkel 6 angeordnet. Dieser Schenkel 6 ist nahezu an den Umrandungen der Öffnung 7 jeweils im rechten Winkel senkrecht nach außen gebogen, wobei sich an dessen freien Enden und denen des geraden Schenkels 3 die Schnurösen 4,5 gering oval erweiternd anschließen.

## Beschreibung

Die Erfindung betrifft eine Angelpose mit einem Multifunktions-Ösenbügel der im Oberbegriff des Anspruchs 1 näher bezeichneten Ausführung.

Gewöhnliche Schnurrösen weisen einen kreisförmig runden Aufbau mit entweder auseinanderstehenden und/oder miteinander verdrillten Armen auf, wobei sie mit diesen Armen mittels eines Wickels, bzw. mittels einer Verbindungsbohrung starr, und dadurch besondes anfällig gegenüber mechanischen Schadeinwirkungen, an den gebräuchlichen Angelposen befestigt sind.

Es sind bereits Schnurösen entwickelt worden, bei denen u.a. das umständliche Einfädeln der Angelschnur fortfällt. Diese seit geraumer Zeit bekannten Schnurösen werden - ähnlich wie bei englischen Wagglerposen - nur am unteren Ende fixiert. Ein nicht unerheblicher Nachteil besteht darin, daß eine allgemein gebräuchliche Schnuröse, die in starrer Verbindung am unteren Ende einer herkömmlichen Angelpose fixiert ist, mechanischen Schadeinwirkungen besonders anfällig ausgesetzt ist, wobei eine solche Angelpose mit gewöhnlichen Mitteln nur der Aufgabe einer Laufpose gerecht wird.

Der Erfindung liegt die Aufgabe zugrunde, die geschilderten Nachteile zu vermeiden und die Konstruktion so zu verbessern, daß die Festigkeit erhöht die Handhabung vereinfacht und die Verwendbarkeit weitreichend ist.

Diese Aufgabe wird bei einem näher beschriebenen Ausführungsbeispiel erfindungsgemäß dadurch gelöst, indem der Multifunktions-Ösenbügel mit zwei im Abstand übereinander angeordneten Schurösen versehen ist, die unterschiedlich in der lichten Weite ausgeführt sind und sich gering oval erweiternd, jeweils an den freien Enden eines federnden geraden Schenkels und eines federnden gebogenen Schenkels, anschließen.

Besonders zum Tragen kommt die Erfindung dadurch, indem die Schnurösen stets federnd in ihre Ausgangsstellung zurückstreben und jeweils im Randbereich einer breiten Seite, eine randeingangs V-förmig einmündende und dabei federkraftmäßig schließende Schnureinleitung besitzen, wobei diese Federkraft im V-förmigen Einmündungsbereich besonders intensiv zum Ausdruck kommt.

Ein Ausführungsbeispiel der Erfindung wird anhand zweier Figuren erläutert und in folgenden beschrieben.
- Fig. 1: einen an einem Schwimmkörper einer Angelpose angeordneten Multifunktions-Ösenbügel in Draufsicht, teilweise perspektivisch;
- Fig. 2: den Multifunktions-Ösenbügel in einer Fig. 1 entsprechenden Darstellung ohne den Schwimmkörper.

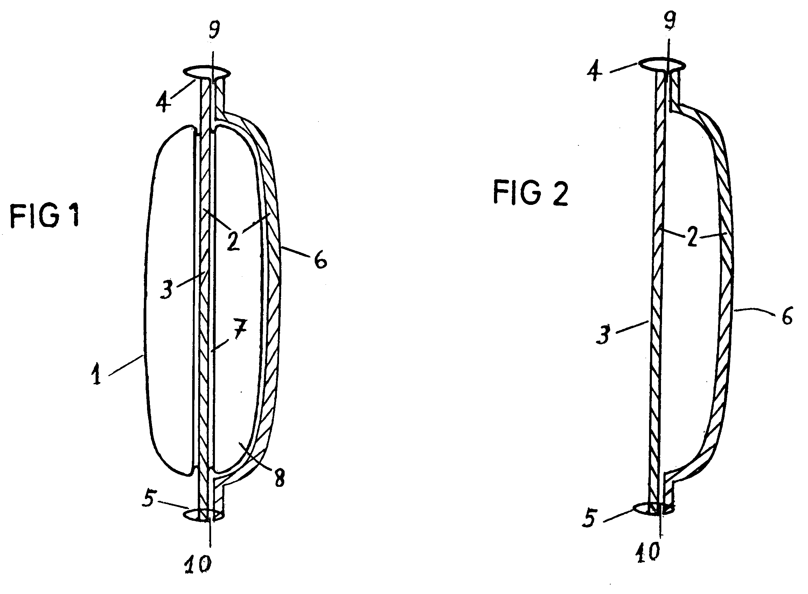

In Fig. 1 ist eine aus einem Multifunktions-Ösenbügel 2 und einem Schwimmkörper 8 bestehende Angelpose mit 1 bezeichnet. Diese Angelpose 1 ist im Querschnitt und im Längstschnitt leicht gewölbt. Entsprechend ist der Grundriß gering oval. Entlang an der Außenkontur verläuft ein entsprechend gebogener Schenkel 6, wobei der gerande Schenkel 3 in der Öffnung 7 bewegbar und an beiden Seiten vorstehend gehaltert ist d.h., an deren Umrandungen senkrecht hervorragend.

Um dem geraden Schenkel 3 längst der Öffnung 7 einen angemessenen Spielraum zu verschaffen, ist es zweckmäßig, daß er nahezu der Öffnung 7 sowohl eingangs als auch ausgangs mit einem seitlichen Vorsprung versehen ist. Diese nicht dargestellten Vorsprünge gleichen einander und sind so dimensioniert, daß der gerade Schenkel 3 an diesen Vorsprüngen im Durchmesser des Querschnitts größer als der Querschnitt der Öffnung 7 ist. Im Hinblick auf eine einfache Montage, ist es weiterhin zweckmäßig, wenn er an einer erhabenen Stelle eine einfach zusammenfügbare und/oder verklebbar hergestellte Zweiteilung aufweist (nicht dargestellt).

Im dargestellten Ausführungsbeispiel ist die Öffnung 7 kreisförmig rund im Zentralbereich hergestellt, es ist aber ohne weiteres möglich, Öffnungen im dezentralen Bereich und mit anderem Querschnitt - z.B. rechteckig - herzustellen. Ist eine Angelpose 1 beispielweise kugelförmig ausgebildet, können vorteilhafter Weise, Öffnungen im äußeren Bereich der Rundung hergestellt werden. Dies erlaubt die Verwendung von besonders stabil herzustellenden Multifunktions-Ösenbügel mit geringer Bauhöhe und gewährleistet einen völlig ungehinderten Lauf der Angelschnur am Außenumfang der entsprechenden Angelpose. Ist die Angelpose 1 z.B. diskusförmig, bzw. flach ausgebildet, dann ist nicht auszuschließen, daß sie gegen die Strömungsrichtung des fließenden Wassers eine stabile, senkrecht im Wasser stehende Lage einnimt, sobald von der Angelschnur eine Zugkraft auf sie ausgeübt wird. Das Zustandekommen einer solchen Lage, wird dadurch bewirkt, indem der gerade Schenkel 3 an einem eine Öffnung 7 enthaltenden nicht dargestellten Vorsprung, gehalter ist, wobei der gebogene Schenkel 6 einen gewissen Abstand zu dessen Außenumfang aufweist und dabei anschlagsmäßig, nach beiden Seiten schwenkbar ist.

Darüber hinaus ist eine entsprechend mit dem erfindungsgemäßen Multifunktions-Ösenbügel 2 versehene Angelpose 1, variabel beanspruchbar d.h., daß die Angelpose 1 unter Beanspruchung der oberen Schnuröse 4 der Aufgabe einer Laufpose gerecht wird, wenn der erforderliche Schnurstopper diese schlupffrei überwinden kann, jedoch von der die geringere lichte Weite aufweisenden unteren Schnuröse 5, stoppbar ist. Im weiteren läßt sich die Eintauchtiefe in der der Köder angeboten werden soll, im Zwischenabstand der Schnurösen 4,5, festlegend einstellen. Selbstverständlich ist die Angelpose 1 auch, unter einseitiger Beanspruchung der unteren Schnuröse 5, zumindest als Laufpose verwendbar.

In Fig. 2 ist der prinzipielle Aufbau des erfindungsgemäßen Multifunktions-Ösenbügels 2 verdeutlicht. Die federnden Schnureinleitungen 9,10 sind freigängig dargestellt, wobei aus der Darstellung ersichtlich ist, daß die Angelschnur von seitwärts außen, in die Schnurösen 4,5 einleitbar und wiederum gleichen Weges ausleitbar ist d.h., daß die Abgelschnur dadurch ausleitbar ist, indem sie der Angler zwischen den Schnurösen 4,5 so angreift, so daß eine Schleife entsteht bevor er den Einleitvorgang wiederholt.

Im weiteren ist aus Fig. 2 besonders gut zu ersehen, daß die Schnurösen 4,5 inbegriffen die Schnureinleitungen 9,10 vollständig funktionsfähig, aus dem geraden Schenkel 3 herstellbar sind d.h., daß der gebogene Schenkel 6 fallweise, insbesondere bei Angelposen mit sensiblen Eigenschaften, in einem gewissen Umfang entbehrlich ist, wobei vorteilhafter Weise auch solche Angelposen betroffen sind, die in üblicher Art und Weise in einer zentral angeordneten Öffnung ein in beiden Richtungen schwergängig verschiebbares Rohr aufweisen, in dessen Öffnung der gerade Schenkel 3 wiederum (wie bereits beschrieben), anordbar ist. wobei er mittels des entsprechenden Rohres, vorteilhafter Weise in der Höhe längstverstellbar ist.

Um weitgehendst das Auslösen der Angelschnur während des Angelvorgangs zu vermeiden, was unabdingbar den Verlust der Angelpose bedeuten würde, ist es von besonderer Wichtigkeit, daß die Schnureinleitungen 9,10, jeweils ein klein wenig und liegend, am Innenumfang der Schnurösen 4,5 vorgeformt sind. (der Übersichtlichkeit halber) nicht eingezeichnet.

Bei einer Angelpose 1, kann mit Sicherheit davon ausgegangen werden, daß das oftmals auftretende Hängenbleiben des Vorfachs über der Hauptschnur, nicht mehr stattfinden kann, da fallsweise das Vorfach über dem Rücken der Hauptschnur, in das Wasser geleitet wird.

Wie vorstehend beschrieben wurde, ist es gemäß der Erfindung möglich, die Festigkeit der Schnuröse zu erhöhen die Handhabung zu vereinfachen und die Verbindung zu den Angelposen zu verbessern, was auf die Verwendung von Schnureinleitungen besitzenden und Federeigenschaften aufweisenden Schnurösen zurückzuführen ist, die mittels federnder Schenkel zusammenwirken.

### Bezugszeichenliste

- 1.: Angelpose
- 2.: Multifunktions-Ösenbügel
- 3.: gerader Schenkel
- 4.: Schnuröse
- 5.: Schnuröse
- 6.: gebogener Schenkel
- 7.: Öffnung
- 8.: Schwimmkörper
- 9.: Schnureinleitung
- 10.: Schnureinleitung

## Patentansprüche

1. Angelpose mit einem mit zumindest einer Schnuröse versehenen Multifunktions-Ösenbügel, welcher an den herkömmlichen in Form und Größe völlig unterschiedlich ausgeführten Angelposen, optimal anpaßbar ist, wobei er an einem eine Öffnung enthaltenden Schwimmkörper einer entsprechenden Angelpose mittels eines federnden geraden Schenkels, in deren Öffnung leichtgängig gehaltert ist und vorteilhafter Weise, aus einem im Wasser leicht auftreibenden und mit Federeigenschaften versehenen zähelastischen Kunstoff gefertigt ist.
**dadurch gekennzeichnet,** daß der gegenüber dem gebogenen Schenkel (6) benachbart angeordnete gerade Schenkel (3) in der Öffnung (7) der Angelpose (1) leichtgängig gehaltert ist und dabei sowohl eingangs als auch ausgangs der Öffnung (7) vorsteht d.h., beidseitig senkrecht hervorragend, daß der an der Angelpose (1) entlang derer Außenkontur angeordnete und entsprechend gebogene Schenkel (6), jeweils nahe an den Umrandungen der Öffnung (7) im wesentlichen im rechten Winkel senkrecht nach außen gebogen ist und dabei mit den so gebildeten Senkrechten, mittels der sich federnd an den freien Enden der Schenkel (3,6) jeweilig anschließenden Schnurösen (4,5), am geraden Schenkel (3) federnd andrückt.

2. Angelpose mit einem Multifunktions-Ösenbügel nach Anspruch 1, dadurch gekennzeichnet, daß die Schnurösen (4,5) unterschiedlich in der lichten Weite ausgeführt sind, wobei die untere Schnuröse (5) gegenüber der oberen Schnuröse (4) die kleinere lichte Weite aufweist.
